# EUROPEAN PATENT APPLICATION

(11) **EP 1 933 223 A1**
(43) Date of publication of application: **18.06.2008**
(21) Application number: 07102991.2
(22) Date of filing: 23.02.2007
(51) Int. Cl.: G06F 1/12, G06F 5/06, G06F 13/40

(54) **Synchronous data reception by means of a local clock**

(30) Priority: 15.12.2006 EP 06126284
(71) Applicant: Agilent Technologies, Inc., Santa Clara CA 95051 (US)
(72) Inventor: Oencue, Emre, 71032 Böblingen (DE)
(74) Representative: Barth, Daniel Mathias

(57) **Abstract**

The invention relates to synchronizing a first data processing device (10,20) with second data processing device (40), comprising receiving a digital data signal (S1) having a data rate associated to a remote clock (CLK1), detecting a sequence of digital data (D1) within the received digital signal (S1), and storing the sampled data into a data buffer (42), generating a local clock signal (CLK2) in dependence on a fill level of the data buffer (42), and reading out said digital data according the local clock signal (CLK2).

## Description

### BACKGROUND ART

The present invention relates data communication.

Modern data processing systems are often built up of a plurality of individual components interconnected by means of one or more internal or external busses. The individual components can be, for example, central processing units (CPUs), memories, RAID subsystems, cache system, NIC cards, mass storage devices, etc. Various data protocols are used to transfer data between the components. Exemplary standards for data protocols for a data exchange on chip level are PCI (Peripheral Component Interconnect) and PCI Express developed by the PCI-SIG industry organization.

The PCI Express architecture is a serial interconnect technology based on the existing PCI system that keeps pace with recent advances in processor and memory subsystems. The PCI Express architecture supports chip-to-chip, board-to-board and adapter solutions. PCI Express currently runs at 2.5 Gbps or 5 Gbps per lane in each direction. Future frequency increases will scale up total bandwidth.

Protocol exercisers or traffic generators stimulate a device under test (DUT) with defined traffic scenarios, and help accelerate system validation. A protocol exerciser typically comprises a physical interface to the DUT, a sequencer for generating a sequence of states depending on internal or external events and for generating corresponding stimulus signals to be provided to the DUT. Protocol analyzers record data traffic between two devices in real-time and visualize trace information at a defined level of the data protocol, e.g. on the packet level of a data packed oriented protocol. Analyzing of the captured data, e.g. searching or filtering is typically realized in a post process after data capturing.

A test system known in the art is e.g. employed by the Agilent E2960 test series consisting of a serial protocol test platform for PCI Express, providing a full speed protocol analyzer and protocol exerciser. Information about the Agilent E2960 test series can be drawn from the according Agilent web pages.

It is known to synchronize the communication devices of a data processing systems by means of distributing a clock signal generated e.g. by a central clock. A receiving unit, e.g. an analyzer of a test setup, might use this clock signal for synchronously taking over the data received from a transmitting device, to be stored and/or further processed. However, the transmitted clock might be affected by internal or external noise, which leads to disturbances like jitter. The more the data rates increase, the less jitter can be tolerated for error free data detection.

### DISCLOSURE OF THE INVENTION

It is an object of the invention to provide improved data communication.

The object is solved by the independent claims. Preferred embodiments are shown by the dependent claims.

According to embodiments of the present invention, a data receiving device is synchronized to a data sending device, whereby the data receiving device is receiving a digital data signal from the data sending device. The digital data signal is physical signal being generated on the base of a digital data sequence or data stream, e.g. by means of non-return to zero (NRZ) modulation or return-to-zero (RZ) modulation. The data stream has a data rate associated to a remote clock generated by a clock circuit being part of or associated to the data sending device. The data receiving device samples the digital data stream of the received digital signal and sequentially stores (reads-in) such detected data into a data buffer. Further, the data receiving device generates a local clock signal in dependence on a fill level of the data buffer that is used for reading out said digital data from the data buffer.

Traditionally, communication devices are synchronized by distributing a clock signal generated by a common clock. However, such clock signal is affected by disturbances that induce jitter to the clock signal. Such jitter however, especially using high data rates, might lead to synchronization problems. The above-described embodiment allows synchronizing the communication devices without a need to distribute a common clock signal. Therewith, the embodiment avoids that electromagnetic noise in-between the communicating device affects the data handling between the devices. Alternatively, a clock signal recovered from the received data signal received has been used as system clock of the receiving device. However, especially if the data rate of the transmitted data signal is modulated, e.g. if a so-called spread spectrum clock SSC is used as remote clock, the data clock varies over the time. Such variations might lead to data loss.

For detecting a digital data stream (i.e. a sequence of digital values) within the digital data signal (i.e. a physical signal having digital levels, e.g. being modulated according to a so-called non-return-to zero (NRZ) modulation), the digital data signal is sampled at successive timing points, whereby the timing points are preferably chosen to sample the signal within its data eye. Therefore, in a further embodiment, a clock signal associated to the digital data signal is recovered from the digital data signal. In ideal case, the recovered clock signal resembles the remote clock signal. A trigger signal is generated on the base of the recovered clock signal and is being provided to a trigger input of a sampling circuit receiving the digital data signal.

In a further embodiment, a fill level indication is generated indicating the fill level of the data buffer. The local clock signal is generated on the base of an output of a local oscillator being local with respect to the data receiving device, wherein the clock pulse rate pulse of the local oscillator is modified in dependence of the fill level indication.

In a further embodiment, the data buffer is realized as first-in first-out (FIFO) buffer.

In a further embodiment, the clock pulse rate is varied by varying a nominal frequency of the clock oscillator. Alternatively, the clock pulse rate might be varied by suppressing a number of clock pulses generated by the local oscillator oscillating at the nominal frequency, whereby the suppression is carried out in dependence of the fill level indication.

In a further embodiment, the fill level indication comprises information indicating of whether the fill level of the data buffer is below a first threshold, and wherein a process of decreasing the rate of clock pulses generated by the local oscillator is started if the fill level falls below the first threshold.

In a further embodiment, the fill level indication comprises information of whether the fill level of the data buffer is above a second threshold, and wherein the process of decreasing the rate of clock pulses is stopped, if the fill level reaches the second threshold.

In a further embodiment, the process of decreasing the rate of clock pulses comprises cyclically suppressing clock pulses of the local oscillator, e.g. suppressing one clock after each occurrence of 200 subsequent clock pulses of the local oscillator.

In a further embodiment, the remote clock signal is a spread spectrum clock signal being generated by modulating its frequency within a certain range below the nominal frequency of the local oscillator, preferably within a range from 0 to -0.5 percent of the nominal frequency.

In a further embodiment, the data receiving device is a protocol analyzer that is connected in-between a communication link between one a plurality of devices. In an embodiment, one of the devises might be a device under test, and another of the devices might be a protocol exerciser.

In a further embodiment, the communication link is realized as so-called PCI Express link.

Embodiments of the invention can be partly or entirely embodied or supported by one or more suitable software programs, which can be stored on or otherwise provided by any kind of data carrier, and which might be executed in or by any suitable data processing unit. Software programs or routines are preferably applied.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 shows a block diagram of a communication system setup with communication devices communication over a communication bus comprising an analyzer with a local clock for data synchronization,

Fig.2 shows a more detailed block diagram of the analyzer, and

Fig.3 shows a principle diagram of the data buffer.

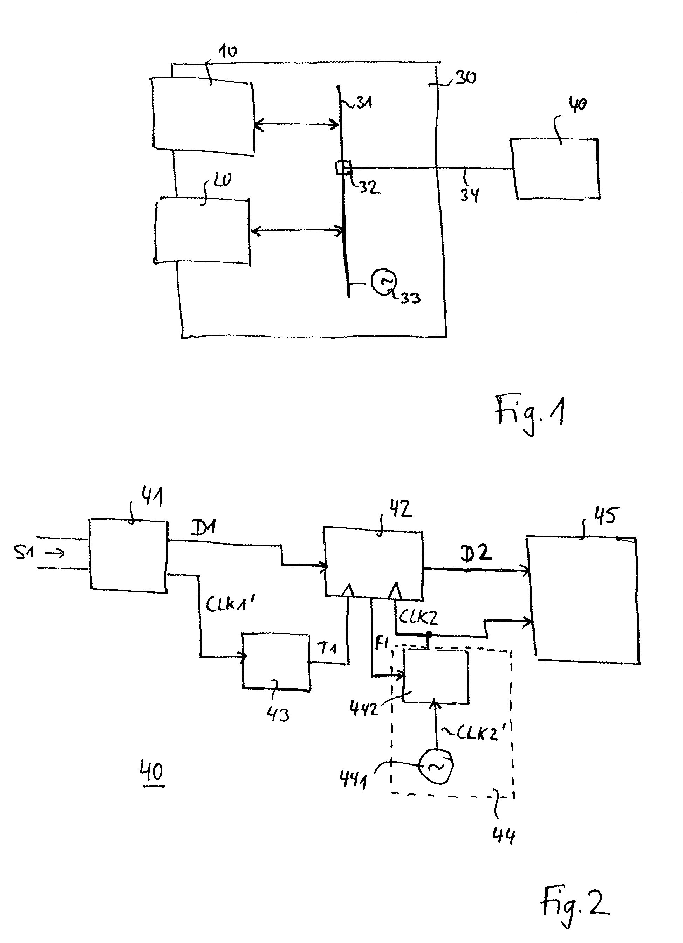

Fig. 1 shows a communication system setup comprising a first communication device 10, a second communication device 20, a central board 30 and a remote communication device 40.

By way of example, the remote communication device 40 is a device only capable of receiving data to be analyzed, in the following also being referred to as analyzer 40. Further, by way of example, the first communication device 10 might be an exerciser and the second communication device 20 might be a device under test.

The central board comprises a high speed communication link 31 and a plurality of interfaces (e.g. PCI Express slots) for closely connecting the first and second communication devices 10 and 20 to the communication link 31. The central board further comprises a clock 33, in the following also being referred to as remote clock 33, for controlling data rates of data transferred over the communication link 31. Further, the communication link 31 comprises a probing point 32 that is adapted for connecting one end of a probing line or probe 34. The other end of the probe 34 is connected to the analyzer 40. By way of example, the probe 34 might have a length in a range from several decimeters to about 1 meter.

In an embodiment, the first and second device exchange data by each transmitting physical digital data signals over the communication link 31. A fraction of the physical digital data signals is split at the probing point and transmitted over the probe 34 to the analyzer 40. The analyzer 40 detects the digital content of the data signal and performs an analysis on the physical layer or on higher protocol layers (e.g. on the so-called transaction layer and/or the so-called data ling layer).

Fig.2 shows an exemplary block diagram of the analyzer 40. The analyzer 40 comprises a transceiver and clock recovery circuit 41, a data buffer 42, a timing circuit 43 and a local clock circuit 44, wherein the local clock circuit 44 comprises a local oscillator 441 and a local clock processing circuit 442. Bay way of example, the transceiver and clock recovery circuit 41 comprises two input ports for receiving a differential digital data signal S1. A first output of the transceiver and clock recovery circuit 41 provides a data sequence D1 and a recovered clock signal CLK1' being associated to the data signal S1. The recovered clock signal CLK1' is provided to the timing circuit 43 that generates a first timing signal T1 comprising a plurality of subsequent first trigger pulses. This timing signal T1 is provided to a first trigger input of the data buffer 42. The data buffer 42 sequentially reads-in the data of the data sequence D1 according to the first timing signal T1. The timing circuit 43 generates the first timing signal T1 by delaying the recovered clock signal CLK1' such that the data buffer takes over the received data each in the center.

The local oscillator 441 generates a periodic clock signal CLK2' at a fix frequency. The local clock processing circuit 442 receives the periodic clock signal CLK2', provides a manipulation according to feedback information FI on the fill level of the data buffer 42, and generates a corresponding second or local clock signal CLK2 provided to a second trigger input of the data buffer 42. The data buffer 42 sequentially reads-out the data stored in the data buffer 42 according to the local clock signal CLK2. The data buffer 42 might be realized as first-in first-out -FIFO- buffer, wherein the data stored the earliest is read-out the earliest from the stored data. The local clock signal CLK2 as well as the read-out data D2 is provided to a logic circuit 45 that processes said data D2 on the base of the local clock signal CLK2.

Traditionally, synchronous communication systems have been driven by periodic clocks. However, periodic data emission at equidistant times would result in a transmission signal having all its energy concentrated at a single frequency and its harmonics, and would therefore radiate energy with a high spectral density within narrow frequency ranges (theoretically infinite spectral densities at distinct frequencies), exceeding regulatory limits for electromagnetic interference. Spread-spectrum clock -SSC- generation is used in synchronous communication systems to reduce the spectral density of the electromagnetic interference that these systems generate. Thereto, the clock frequency is slightly varied within a certain range. For example a 33 Kilo Hertz triangular SSC modulation might be carried out within a range from 0 to -0.5 % of the nominal frequency (also being referred to as down spreading). The data rate of the data signal S1 might be e.g. 2.5 or 5 Gigabit per second.

Down spreading the remote clock signal means that the data rate never exceeds a defined clock rate associated to the nominal frequency, but that the data rate is slightly below this data rate. That means that if the data buffer 42 was read-out at the nominal frequency, e.g. being provided from the local oscillator 44, the data buffer 42 might get into an underflow state. For avoiding such underflow, the feedback information FI indicates whether the fill level of the data buffer 42 is below a minimum fill level. If so, the local clock processing circuit 442 starts suppressing clock pulses of the periodic clock signal CLK2' and providing the resulting clock signal as local clock signal CLK2 to the data buffer 42 and to the analyzer logic circuit 45. Due to the reduced reading-out rate, the fill level of the data buffer 42 will increase.

In an embodiment, the local clock processing circuit 442 cyclically suppresses clock pulses of the periodic clock signal CLK2', e.g. suppresses one clock pulse after an occurrence of 200 clock pulses. Alternatively, the suppression cycle might be a function of the actual fill level.

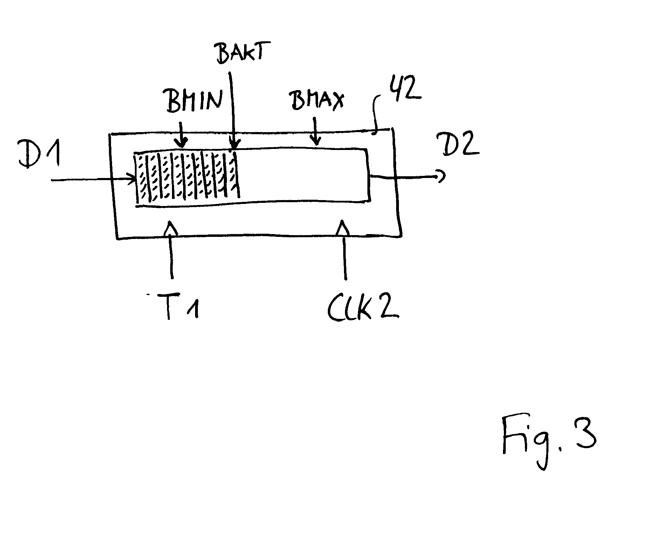

Fig.3 shows an illustration of a buffer 42 indicating a minimum fill level BMIN and a maximum fill level BMAX. The read-in digital data D1 is read-in according to the first timing signal T1, being derived from the remote clock signal CLK1 associated to the received data signal S1 that might be received from a remote clock circuit or from a local data recovery circuit 41. The buffer output data D2 is read-out from the buffer according to the local clock signal CLK2.

At an arbitrary start point, the actual fill level BAKT of the data buffer might be between the minimum fill level BMIN and a maximum fill level BMAX. Due to a down spreading of the remote clock signal CLK1, the actual fill level of the data buffer 42 will decrease. If the actual fill level falls below (or equals) the minimum fill level BMIN the local clock processing circuit 442 starts cyclically suppressing single clock pulses of the periodic clock signal CLK2'. The suppression cycle is chosen such, that the average clock rate of the local clock signal CLK2 is greater than the minimum clock rate of the timing signal T1 (being derived from the remote clock signal CLK1), so that the actual fill level will increase. As soon as the maximum fill level BMAX is reached (or passed), suppression will be stopped. The minimum fill level BMIN and a maximum fill level BMAX might be arbitrarily chosen. The minimum fill level BMIN is preferably chosen equal or greater than an underflow threshold. The maximum fill level BMAX might be chosen to be equal or greater than the minimum fill level BMIN, but is preferably chosen to be smaller or equal than an overflow threshold.

The invention can be integrated in any kind communication devices of synchronous or semi-synchronous data processing systems.

## Claims

1. A method for synchronizing a first data processing device (10, 20) with second data processing device (40), comprising:
receiving a digital data signal (S1) having a data rate associated to a remote clock signal (CLK1),
detecting a sequence of digital data (D1) of the received digital signal (S1), and storing the digital data into a data buffer (B1),
generating a local clock signal (CLK2) in dependence on a fill level of the data buffer (B1), and
reading out said digital data according the local clock signal (CLK2).

2. The method of claim 1, further comprising recovering the remote clock signal from the digital data signal (S1) and using the recovered signal (CLK1') for triggering storage the digital data signal (D1) into the data buffer (B1).

3. The method of claim 1 or any one of the above claims, comprising generating a fill level indication (FI) indicating the fill level of the data buffer, varying, dependent on the fill level indication, a rate of clock pulses generated by a local oscillator (CLK2')

4. The method of claim 3, wherein the local clock signal (CLK2) is provided by an output of the local oscillator (441), wherein the frequency of the clock oscillator is varied in dependence to the fill level indication (FI).

5. The method of claim 3, wherein the local clock signal (CLK2) is provided by suppressing a number of clock pulses generated by the local oscillator (441) oscillating at a nominal frequency, the number being dependent on the fill level indication (FI).

6. The method of claim 5, wherein the fill level indication (FI) comprises an information indicating of whether the fill level of the data buffer (42) is below a first threshold (BMIN), and wherein a process of decreasing the rate of clock pulses generated by the local oscillator (441) is started if the fill level falls below the first threshold (BMIN).

7. The method of claim 6 or any one of the above claims, wherein the fill level indication (FI) comprises information of whether the fill level of the data buffer (42) is above a second threshold (BMAX), and wherein the process of decreasing the rate of clock pulses stops, if the fill level reaches the second threshold (BMAX).

8. The method of claims 6 or 7, wherein the process of decreasing the rate of clock pulses comprises cyclically suppressing clock pulses of the local oscillator (441).

9. The method of claim 5 or any one of the above claims, wherein the remote clock signal (CLK1) is a spread spectrum clock signal being generated by modulating its frequency within a certain range below the nominal frequency, preferably within a range from 0 to -0.5 percent of the nominal frequency.

10. A software program or product, preferably stored on a data carrier, for executing the method of claim 1 or any one of the above claims, when run on a data processing system such as a computer.

11. A communication device (40) adapted to be connected to a data processing system over a serial data link (31), comprising:
a detecting device (41) adapted for detecting a sequence of digital data (D1) within a received digital signal (S1) having a data rate associated to a remote clock signal (CLK1),
data buffer (42) adapted for sequentially reading-in the detected data according to a remote clock signal (CLK1, CLK1') and sequentially reading-out the sampled data according to a local clock signal (CLK2), and
a clock generator (44) adapted for generating the second clock signal (CLK2) in dependence on a fill level of the data buffer (42).
